# EUROPÄISCHE PATENTSCHRIFT

(11) **EP 2 132 024 B1**
(45) Veröffentlichungstag und Bekanntmachung des Hinweises auf die Patenterteilung: **28.09.2011**
(21) Anmeldenummer: 08716382.0
(22) Anmeldetag: 08.03.2008
(51) Int. Cl.: B29C 65/34, F16L 47/03, B29D 23/00, B29C 65/36, B29C 65/14

(54) **AUSGLEICHSELEMENT ZUM VERBINDEN VON BAUTEILEN**
COMPENSATION ELEMENT FOR CONNECTING COMPONENTS
ÉLÉMENT COMPENSATEUR POUR RELIER DES ÉLÉMENTS DE CONSTRUCTION

(30) Priorität: 21.03.2007 DE 102007014049
(43) Veröffentlichungstag der Anmeldung: 16.12.2009
(73) Patentinhaber: Friatec Aktiengesellschaft, 68229 Mannheim (DE)
(72) Erfinder: MAIER, Fabian, 67368 Westheim (DE); LICHTBLAU, Rigo, 63309 Mannheim (DE)
(74) Vertreter: Tönhardt, Marion
(86) Internationale Anmeldenummer: PCT/EP2008/001870
(87) Internationale Veröffentlichungsnummer: WO 2008/113488

(56) Entgegenhaltungen:
- WO-A-98/48207
- WO-A-99/13256
- WO-A-99/22170
- DE-A1- 3 720 577
- DE-A1- 10 211 703
- FR-A- 2 648 077
- GB-A- 2 425 337
- JP-A- 6 002 797
- JP-A- 11 270 771
- US-A- 4 436 988

## Beschreibung

Die Erfindung betrifft ein Ausgleichselement zum Verbinden von Bauteilen aus schmelzbarem Kunststoff, das als zumindest abschnittsweise konisch gestalteter Hohlzylinder ausgebildet ist, mit wenigstens einem Heizelement, das bei Beaufschlagung mit Energie die Innenfläche oder die Außenfläche des Ausgleichselementes oder beide mindestens bereichsweise zum Herstellen einer Schweißverbindung mit den Bauteilen heizt.

Derartige Ausgleichselemente, auch als Heizmuffen oder Schweißmuffen bezeichnet, sind seit langem bekannt. Sie dienen hauptsächlich zur Herstellung nicht lösbarer Verbindungen zwischen Kunststoffrohren oder Kunststoffrohren und ihrer Fittings.

So zeigt die FR-A-1 416 207, wie zwei Rohre mittels einer konischen Muffe, die ein Heizelement enthält, verschweißt werden können. Die Rohre weisen dabei selbst Konizitäten auf, die der Konizität der Heizmuffe sowohl innen als auch außen entsprechen.

Die DE-A-24 19 893 offenbart eine Rohrverbindung mit Hilfe einer Doppelmuffe, deren Innenseiten kegelstumpfförmig gestaltet sind. Die zu verbindenden Rohre werden von beiden Seiten in die Doppelmuffe geschoben und mittels eines nicht näher beschriebenen konischen Verbindungselementes, dort als Schweißverbindung oder Schweißglied bezeichnet, miteinander verschweißt.

Bei der Vorgehensweise gemäß der DE-A-34 22 074 werden, ähnlich wie bei der FR-A-1 416 207, ein Rohr und eine Muffe konisch kalibriert, wobei der Toleranzspalt zwischen Rohr und Muffe nach der Stärke der später einzusetzenden Schweißmuffe bemessen ist.

Die JP-B-52 066 582 zeigt ebenfalls eine konische Schweißmuffe, bei der ein durchgehender Schlitz dafür sorgt, daß sie in ihren radial Abmessungen verändert werden kann.

Eine weitere konische Schweißmuffe, die gelocht oder als Netz ausgebildet sein kann, ist in der US 3 061 503 gezeigt.

Ein Ausgleichselement bzw. eine Muffe der eingangs genannten Gattung ist insbesondere aus der WO 02/11973 bekannt und dient dazu, ein Rohr einer Kraftstoffleitung mit einem Fahrzeugtank zu verbinden. Das Ausgleichselement enthält das Heizelement auf der Außenfläche ebenso wie auf der Innenfläche und wird einen Ringspalt zwischen den miteinander zu verbindenden Bauteilen gebracht, woraufhin die Verschweißung stattfindet.

Die DE 10 81 288 offenbart ein Verfahren zum Verbinden eines Rohres und einer Muffe unter Zwischenschaltung einer keilförmigen Schweißhülse. Eine konische Außenfläche der Hülse ist dabei in die konische Innenfläche der Muffe eingepaßt, so daß die Hülse nach dem schlüssigen Zusammenstecken von Rohr, Muffe und Hülse um einige Millimeter aus der Muffe herausragt. Während des Schweißvorganges wird die Hülse mittels einer Zange in den Konus der Muffe hineingedrückt.

Die JP 06 00 2797 A offenbart eine Schweißmuffe zum Verbinden von Bauteilen aus schmelzbarem Kunststoff, bei der ein Schweißabschnitt zum Verschweißen zweier Rohrenden mit der Muffe und zwei konische Abschnitte mit Einschnitten für die Fixierung der zu verschweißenden Rohrenden vorgesehen sind.

Bei geringen Rohrdurchmessern haben sich derartige Ausgleichselemente durchaus bewährt. Bei höheren Rohrdurchmessern jedoch, die durchaus in der Größenordnung von 1000 mm oder darüber liegen können, sind die Fertigungstoleranzen so groß, daß Spalte zwischen den Bauteilen auftreten, welche das fluiddichte Verschweißen erschweren, wenn nicht gar verhindern, und dies trotz der Konizität der Muffe, welche auch ohne vorangehende Kalibrierung der zu verbindenden Bauteile für einen gewissen Toleranzausgleich sorgt. Das Problem verschärft sich noch, wenn beispielsweise ein Rohr unrund ist.

Dieses Problem wird durch eine Muffentechnik gelöst, bei der ein Ausgleichselement mit den Merkmalen des Anspruchs 1 verwendet wird. Vorteilhafte Ausgestaltungen sind Gegenstand der rückbezogenen Unteransprüche. Verfahren zum Verbinden von Bauteilen aus schmelzbarem Kunststoff, bei denen die erfindungsgemäßen Ausgleichselemente verwendet werden, sind Gegenstand der Ansprüche 11 bis 14.

Das Ausgleichselement dieser Muffentechnik zeichnet sich dadurch aus, daß, ausgehend von jeder Randkante, Einschnitte im wesentlichen in axialer Richtung eingebracht sind, wobei zumindest ein Teil der Einschnitte sich bis nahe an oder über eine flexibilitätssichernde Ebene des Ausgleichselementes hinaus erstreckt. Erfindungsgemäß ist vorgesehen, dass der Hohlkörper um seine Mittelachse axialsymmetrisch ausgebildet ist und seine Innenfläche parallel zu seiner Mittelachse verläuft, während seine Außenfläche unter einem bestimmten Winkel zu der Mittelachse verläuft. Des weiteren sollen erste Einschnitte, die von der ersten Randkante ausgehen, und zweite Einschnitte, die von der zweiten Randkante ausgehen, vorliegen, die sich jeweils bis nahe an oder über die flexibilitätssichernde Ebene hinaus erstrecken. Um zu vermeiden, daß bei ungünstiger Anordnung der Einschnitte ein die Flexibilität des Ausgleichselementes nachteilig beeinflussender, das Ausgleichselement umlaufender Bereich verbleibt, wird vorab eine flexibilitätssichernde Ebene definiert, die als Schnittfläche mit dem Ausgleichselement einen vollständigen Kreis oder eine vollständige Ellipse enthält, deren Flächennormale also parallel zur Mittelachse des Hohlkörpers ist oder einen bestimmten Winkel mit ihr bildet. Aus fertigungstechnischen Gründen, auch was das Einbringen der Einschnitte betrifft, wird die Flächennormale der flexibilitätssichernden Ebene im Regelfall parallel zur Mittelachse des Hohlkörpers liegen, so daß sie selbst parallel zu den Randkanten des Hohlkörpers ist. Beispielweise kann die flexibilitätssichernde Ebene die Äquatorebene des Hohlkörpers sein.

Wesentlich ist immer, daß sich ein Teil der Einschnitte jeweils bis mindestens nahe an oder über die flexibilitätssichernde Ebene erstreckt. Durch die somit gezielte Führung der Einschnitte in axialer Richtung wird das Ausgleichselement in hinreichendem Maße flexibel, daß es sozusagen im Rohr wandern kann, um jegliche auftretende Spalte zu schließen. So wird der vermeintliche Nachteil gegenüber einer Standard-Muffenschweißung, nämlich das Doppelschweißen, also das Schweißen auf beiden Seiten des Ausgleichselementes, ausgeglichen, so daß die Schweißzeit wegen des geringeren Spaltes sogar eher kürzer wird.

Überdies können auch Sonderrohre, wie Mehrschichtrohre, Verbundrohre usw., die aufgrund ihrer Bauart nur geringe Spalte über Wärmeausdehnung ausgleichen bzw. überbrücken, mit der neuen Muffentechnik einfach geschweißt werden.

Nach einer vorteilhaften Ausgestaltung sind die von einer ersten Randkante ausgehenden Einschnitte gegenüber den von der zweiten Randkante ausgehenden Einschnitten in Umfangsrichtung des Ausgleichselementes versetzt angeordnet, weiter bevorzugt auch alternierend, wobei abwechselnd ein Einschnitt von der ersten Randkante aus an oder über die flexibilitätssichernde Ebene verläuft, dann ein Einschnitt von der zweiten Randkante her, wieder ein Abschnitt von der ersten Randkante her usw.

Die Einschnitte können senkrecht zur jeweiligen Randkante verlaufend angeordnet sein oder schräg dazu verlaufen. Sie können gleich oder unterschiedlich lang sein, beispielsweise kann vorgesehen sein, daß nur jeder zweite oder dritte der Einschnitte sich von einer der Randkanten her über die flexibilitätssichernde Ebene hinaus erstreckt.

Auch die Formgebung der Einschnitte ist allenfalls fertigungstechnischen Grenzen unterworfen. Sie können gradlinig sein oder gekrümmt, sie können über ihren Verlauf die gleiche Breite oder eine variierende Breite aufweisen. Es hat sich herausgestellt, daß beste Ergebnisse erreicht werden, wenn die Einschnitte mit einer schlüssellochartigen Kontur gebildet sind.

Als Heizelement sind Metallgitter, Metallfäden, Metallpartikel oder Metalldrähte geeignet, aber auch eine Schicht oder ein Leiter aus elektrisch leitendem Kunststoff, wobei die Einbringung der Energie mittels Stromfluß oder Induktion oder Mikrowellentechnologie erfolgt.

Vorzugsweise ist das mindestens eine Heizelement eine Heizwendel, so daß mit einer bewährten Technologie gearbeitet werden kann. Um eine ausreichende Heizfläche zur Verfügung zu stellen, ist es zweckmäßig, die Heizwendel mäanderförmig zwischen den Einschnitten zu führen. Dies kann geschehen, indem das Mäander so geführt wird, daß die Hauptlänge der Drähte sich im wesentlichen in die Richtung der Äquatorebene erstreckt oder aber, daß sich die Hauptlänge im wesentlichen senkrecht dazu erstreckt.

Das Heizelement kann dabei als bifilares Element ausgebildet sein, bei dem sich die Kontaktanschlüsse zum Beaufschlagen mit Energie nahe beieinander befinden.

Mehrere Heizelemente können verwendet werden, die unabhängig voneinander mit Energie zu beaufschlagen sind.

Das Ausgleichselement wird vorzugsweise in Verbindung mit einer Außenhülse verwendet, um eine Muffe zu bilden, wobei Muffe hier als ein Bauteil zur unterbrechungsfreien Verbindung beispielsweise zweier Rohre zu verstehen ist. Die Außenhülse ist grundsätzlich längenvariabel und daher vielseitig einsetzbar. Sie kann zum Beispiel auch dazu dienen, ein nicht bewickeltes T-Stück mit einem Rohr zu verbinden. Die Außenhülse kann auch so aufgebaut sein, daß die Hülsenwinkel unter einem Winkel zueinander angeordnet sind. Es können auch die Hülsenenden wie die Außenhülsen unterschiedliche Innendurchmesser aufweisen. Für die Verzweigung mehrerer Rohrleitungen sind Y- oder T-förmige Hülsen möglich. Außen wie auch innen in der Außenhülse kann ein Anschlag ausgebildet sein, beispielsweise in Form eines Ringflansches, der dafür sorgt, daß die Bauteile eine definierte Position in der Außenhülse annehmen. Bei Hochdruckanwendungen ist eine Armierung der Außenhülse mit Fasern zweckmäßig. Die Außenhülse und das Ausgleichselement bestehen selbst aus einem schmelzbaren Kunststoff, der mit dem schmelzbaren Kunststoff der Bauteile kompatibel ist.

Ein Verfahren zum Verbinden von Bauteilen aus schmelzbarem Kunststoff weist folgende Schritte auf:
a) Bereitstellen einer Muffe aus einer Außenhülse und einem darinliegenden Ausgleichselement nach einem der Ansprüche 1 bis 10;
b) Aufschieben der Muffe auf ein Bauteil, wobei sich die Außenhülse und das Ausgleichselement axial gegenläufig verschieben und Spalte zwischen Bauteil und Ausgleichselement sowie zwischen Ausgleichselement und Außenhülse minimiert werden;
c) Beaufschlagen des Heizelementes der Innenfläche des Ausgleichselementes mit Energie, um das Bauteil und das Ausgleichselement miteinander zu verschweißen;
d) Beaufschlagen des Heizelementes der Außenfläche des Ausgleichselementes mit Energie, um die Außenhülse und das Ausgleichselement miteinander zu verschweißen.

Die Schritte c) und d) können gleichzeitig oder auch vertauscht durchgeführt werden.

Bei diesem Verfahren kann der Schritt c) aus den Teilschritten
c1) Beaufschlagen des Heizelementes der Innenfläche des Ausgleichselementes mit einer ersten Energiemenge, um das Bauteil vorzuwärmen; und
c2) Beaufschlagen des Heizelementes der Innenfläche des Ausgleichselementes mit einer zweiten Energiemenge, um das Bauteil und das Ausgleichselement miteinander zu verschweißen bestehen.

Ebenso kann der Schritt d) aus den Teilschritten
d1) Beaufschlagen des Heizelementes der Außenfläche des Ausgleichselementes mit einer ersten Energiemenge, um die Außenhülse vorzuwärmen; und
d2) Beaufschlagen des Heizelementes der Außenfläche des Ausgleichselementes mit einer zweiten Energiemenge, um das Bauteil und das Ausgleichselement miteinander zu verschweißen,
bestehen.

So besteht die Möglichkeit, die Bauteilanpassung durch die axiale Verschiebung des keilförmigen Ausgleichselementes mittels Wärmeeintrag zu unterstützen, ohne daß Rundungsschellen nötig wären. Auch das Abschälen der Ovalität, wie es im Stand der Technik ist, mit dem Nachteil, daß das Bauteil geschwächt wird, ist nicht mehr erforderlich.

Ein weiteres Verfahren zum Verbinden von Bauteilen aus schmelzbarem Kunststoff, das bei Reparaturen und nachträglichem Einbau einzusetzen ist, weist folgende Schritte auf:
a) Bereitstellen einer Muffe aus einer Außenhülse und zwei darinliegenden Ausgleichselementen nach einem der Ansprüche 1 bis 10;
b) vollständiges Aufschieben der Muffe auf ein erstes Bauteil;
c) Anlegen eines zweiten Bauteils an das erste Bauteil;
d) Verschieben der Muffe in axialer Richtung über die Anlagestelle zwischen dem ersten Bauteil und dem zweiten Bauteil, so daß eines der Ausgleichselemente über dem ersten Bauteil liegt und das andere Ausgleichselement über dem zweiten Bauteil liegt;
e) gleichzeitiges oder aufeinanderfolgendes Verschieben der Ausgleichselemente in axialer Richtung aufeinander zu; und
f) Beaufschlagen der Heizelemente von Innenfläche und Außenfläche der Ausgleichselemente gleichzeitig oder nacheinander mit Energie, um das erste Bauteil, die Muffe und das zweite Bauteil miteinander zu verschweißen.

"Vollständiges Aufschieben" meint dabei, daß die Außenhülse mitsamt den beiden Ausgleichselementen auf dem ersten Bauteil sitzen.

Muß beispielsweise eine Rohrleitung repariert werden, so kann der Bereich, der die Leckage zeigt, herausgetrennt werden, anschließend wird über beide freiliegenden Rohrenden jeweils eine Muffe gezogen. Ein Reparaturstück wird dann zwischen die beiden Rohrenden gesetzt, anschließend werden die Muffen, wie im Schritt d) beschrieben, über die Anlagestellen von Rohrenden und Reparaturstück geschoben. Das Verschieben der Ausgleichselemente zum Verkeilen kann mechanisch oder hydraulisch geschehen. Anstelle des Reparaturstückes kann auch ein T-Stück oder ein anderes Bauteil eingesetzt werden.

Im folgenden soll die Erfindung anhand der beigefügten Zeichnung näher erläutert werden, wobei:
- Figur 1: in schematischer Weise zeigt, wie beim Einsetzen eines Rohres in ein Anschlußstück ein Montagespalt entsteht;
- Figur 2: die Verwendung der Muffentechnik zeigt;
- Figur 3: eine Längsschnittansicht eines als Schiebemuffe ausgebildeten konischen Augleichselementes ist;
- Figur 4: eine perspektivische Ansicht einer ersten Ausführungsform eines Ausgleichselementes gemäß der vorliegenden Erfindung ist;
- Figur 5: eine perspektivische Darstellung einer zweiten Ausführungsform eines Ausgleichselementes gemäß der vorliegenden Erfindung ist;
- Figur 6: eine perspektivische Darstellung einer dritten Ausführungsform eines Ausgleichselementes gemäß der vorliegenden Erfindung ist;
- Figur 7: eine Darstellung einer vierten Ausführungsform eines Ausgleichselementes gemäß der vorliegenden Erfindung ist;
- Figur 8: eine Draufsicht auf eine vorteilhafte Schlitzgeometrie ist.
- Figur 9: eine perspektivische Darstellung eines Ausgleichselementes gemäß der vorliegenden Erfindung ist, bei einer Heizwendelanordnung gemäß einer ersten Ausführungsform der Erfindung verwendet werden;
- Figur 10: eine Detaildarstellung der Heizwendel ist, die bei dem Ausgleichselement der Figur 8 verwendet wird;
- Figur 11: einen modularen Heizwendelaufbau zeigt; und
- Figur 12: ein Ausgleichselement nach Figur 4 zeigt, bei der eine Heizwendelanordnung nach einer zweiten Ausführungsform der Erfindung eingebracht ist.

Die Zeichnungen sind schematische Darstellungen und nicht notwendig maßstabsgetreu.

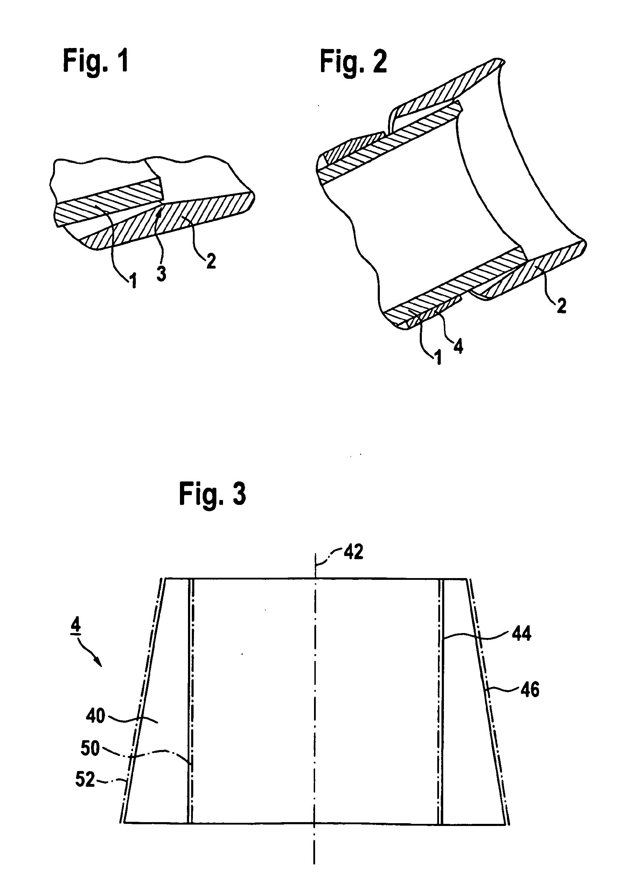

Figur 1 zeigt stark schematisiert und teilweise weggeschnitten ein Rohr 1, das in ein Anschlußstück oder einen Muffenkörper 2 eingeschoben ist. Aufgrund von Fertigungstoleranzen und Montagebedingungen wird üblicherweise ein Montagespalt 3 zwischen dem Rohr 1 und dem Anschlußstück 2 entstehen, der für eine fluiddichte Verbindung verschlossen werden muß. Zum Verbinden eines Rohres 1 mit einem Anschlußstück oder einem Muffenkörper 2 wird, wie Figur 2 zeigt, ein konusartiges Ausgleichselement 4, hier eine Schiebemuffe, zunächst über das Rohr 1 geschoben, woraufhin dann das Anschlußstück 2 aufgesetzt wird. Die Ausgleichselement 4 wird in den Übergangsbereich zwischen Rohr 1 und Rohr 2 gebracht und dort verschweißt.

Die grundsätzliche Geometrie eines als Schiebemuffe zu verwendenden Ausgleichselementes 4 ist in Figur 3 in einer Längsschnittansicht gezeigt. Das Ausgleichselement 4 besteht aus einem konisch gestalteten Hohlzylinder 40, der um seine Mittelachse 42 axial symmetrisch ausgebildet ist. Die Innenfläche 44 ist parallel zu der Mittelachse 42, während die Außenfläche 46 unter einem bestimmten Winkel zur Mittelachse 42 verläuft. Mindestens ein Heizelement 50, 52, sehr schematisch angedeutet durch die Punkt-Strich-Linie bzw. die Punkt-Doppelstrich-Linie ist auf der Innenfläche 44 bzw. der Außenfläche 46 des Hohlkörpers 40 vorgesehen. Als Heizelement sind Metallgitter, Metallfäden, Metallpartikel oder Metalldrähte geeignet, aber auch eine Schicht oder ein Leiter aus elektrisch leitendem Kunststoff. Das Ausgleichselement 4 kann auch insgesamt aus leitendem Kunststoff bestehen. Es ist zweckmäßig, für Innenfläche 44 und der Außenfläche 46 getrennt mit Energie beaufschlagbare Heizelemente 50 bzw. 52 vorzusehen, es ist aber auch möglich, einen leitenden Kontakt zwischen den Heizelementen 50 und 52 herzustellen, so daß diese nur gemeinsam mit Energie zu beaufschlagen sind.

Wenn im folgenden von "Unterkante" und "Oberkante" die Rede ist, so sollen darunter jeweils die Randkanten des Ausgleichselementes verstanden werden, die beim Betrachten der Zeichnungsfiguren unten bzw. oben liegen. Es ist also die Unterkante des Ausgleichselementes diejenige, die beim konisch gestalteten Hohlkörper den größeren Radius hat, die Oberkante ist die mit dem kleineren Radius.

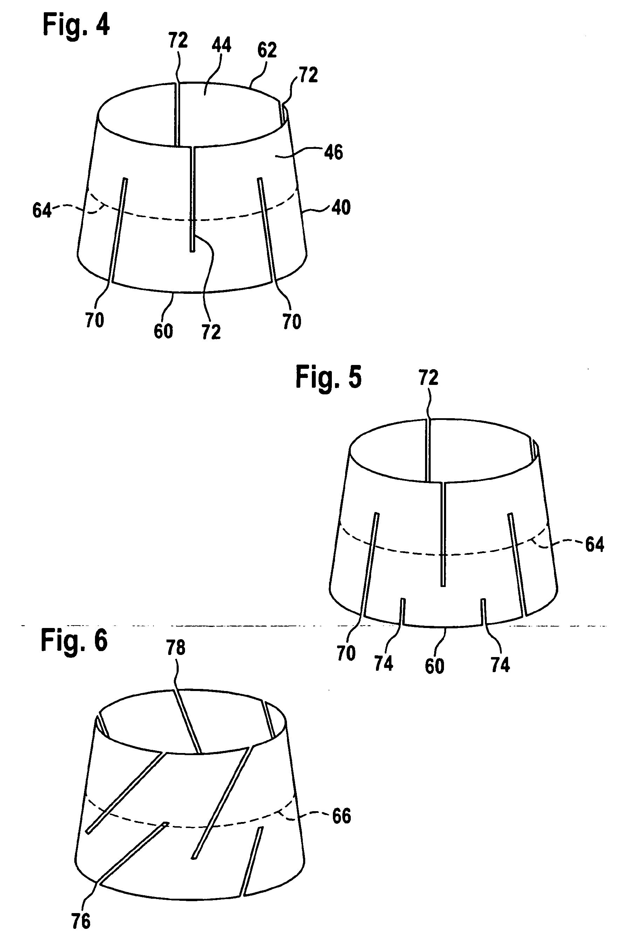

Figur 4 zeigt ein Ausgleichselement nach einer ersten Ausführungsform der Erfindung. In den konisch gestalteten Hohlkörper 40 sind ausgehend von seiner Unterkante 60 Einschnitte 70 ausgebildet, die sich in Richtung auf die Oberkante 62 durchgehend von der Innenfläche 44 zur Außenfläche 46 erstrecken, aber vor dieser enden, wobei sie mindestens über die Äquatorialebene 64 hinaus verlaufen, also der Ebene, die die Länge des Hohlkörpers halbiert und senkrecht zu der Mittelachse 42 (Figur 3) verläuft. Ebenso sind ausgehend von der Oberkante 62 des Hohlkörpers 40 sich in Richtung auf die Unterkante 60 erstreckende Einschnitte 72 ausgebildet, die vor der Unterkante 60 enden, sich aber wiederum über die Äquatorialebene 64 hinaus erstrecken. Sowohl die Einschnitte 70 als auch die Einschnitte 72 verlaufen senkrecht zur Unterkante 60 bzw. zur Oberkante 62 des Hohlkörpers 40. Dabei wechseln sich Einschnitte 70 und 72 um den Umfang des Hohlkörpers 40 ab.

Während bei der Ausführungsform der Figur 5 alle Einschnitte 70, 72 mit gleicher Länge gebildet sind, weist die Ausführungsform nach Figur 5 Einschnitte 74 auf, die deutlich kürzer sind als die Einschnitte 70 und 72 und sich auch nicht bis zur Äquatorialebene 64 erstrecken. Diese kürzeren Einschnitte 74 dienen dazu, die Flexibilität des Ausgleichselementes im Bereich der Unterkante 60 weiter zu verbessern, ohne die Festigkeit insgesamt wesentlich zu beeinträchtigen.

Wie bereits eingangs erläutert ist es erfindungswesentlich, daß nirgendwo im Hohlkörper ein geschlossener, umlaufender "Ring" entsteht, der nur schwer verformbar wäre. Die Ausführungsformen nach den Figuren 4 und 5 stellen dies dadurch sicher, daß die Einschnitte 70 und 72 sich jeweils von unterschiedlicher Richtung her über die Äquatorialebene 64 hinaus erstrecken. Unter bestimmten Umständen, beispielsweise bei relativ geringen Wanddicken, kann auch daran gedacht werden, daß die Einschnitte kurz vor der flexibilitätssichernde Ebene enden, wodurch zwar ein geschlossener, aber dennoch verformbarer "Ring" verbleibt.

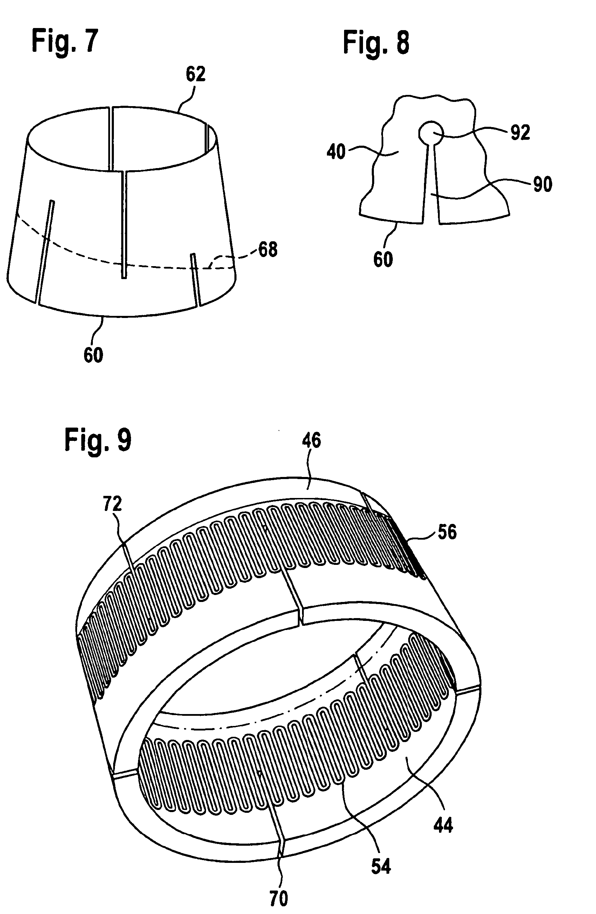

Eine weitere Ausführungsform ist in Figur 6 gezeigt, bei der schräg verlaufende Einschnitte 76, 78 sich jeweils auf die gegenüberliegende Kante hin erstrecken und dabei über eine Flexibilitätsebene 66 hinaus verlaufen, die unterhalb der Äquatorialebene 64 liegt. Eine solche Ebene muß nicht notwendigerweise senkrecht zur Mittelachse 42 (Figur 3) des Hohlkörpers 40 verlaufen, sondern kann zu dieser geneigt sein. Diese Situation ist in Figur 7 dargestellt, bei der eine flexibilitätssichernde Ebene 68 bzw. ihre Flächennormale unter einem Winkel zur Mittelachse liegt und somit auch nicht zur Unterkante 60 bzw. Oberkante 62 des Hohlkörpers 40 parallel verläuft. Dieser Anordnung kann dann vorteilhaft sein, wenn in bestimmten Bereichen der herzustellenden Verbindung zwischen zwei Bauteilen eine besonders große Schweißfläche nötig ist.

Bei den bisher gezeigten Ausführungsformen eines Ausgleichselementes gemäß der vorliegenden Erfindung sind die Einschnitte als langgestreckte Schlitze mit parallelen Begrenzungswänden dargestellt worden. Grundsätzlich sind auch andere Ausgestaltungen der Schlitze möglich, sie können sich zur Unterkante oder zur Oberkante des Hohlkörpers aufweiten, unterschiedliche Breiten aufweisen usw. Als besonders vorteilhaft hat sich jedoch die Ausgestaltung eines Einschnittes herausgestellt, die in Figur 8 dargestellt ist. Hier ist der Einschnitt 90 in Draufsicht schlüssellochartig, d.h. ausgehend von beispielsweise der Unterkante 60 des Hohlkörpers 40 verjüngt sich der Einschnitt 90 in Richtung auf die flexibilitätssichernde Ebene zu und mündet in einem kreisförmigen Ausschnitt 92, die im wesentlichen dazu dient, beim Zusammenfügen verdrängtes Material des Ausgleichselementes aufzunehmen.

Figur 9 zeigt ein Ausführungsbeispiel eines Ausgleichselementes ähnlich dem der Figur 4, bei dem auf der Innenfläche 44 und auf der Außenfläche 46 jeweils eine Heizwendel 54 bzw. 56 aufgebracht ist, die mäanderförmig um den Umfang des Hohlkörpers 40 geführt ist. Bei dieser Ausführungsform ist das Mäander so geführt, daß sich die Hauptlänge der Heizwendeldrähte im wesentlichen in die Richtung der Mittelachse 42 (Figur 3) bzw. in die Längsrichtung der Einschnitte 70, 72 erstreckt. Diese Ausgestaltung hat den Vorteil, daß nahezu die gesamte Oberfläche des Ausgleichselementes mit Heizdraht belegt werden kann; sie ist allerdings fertigungstechnisch schwierig zu realisieren, da zum Einbringen der Heizwendel das Werkzeug oftmals um eine 180°-Kehre geführt werden muß.

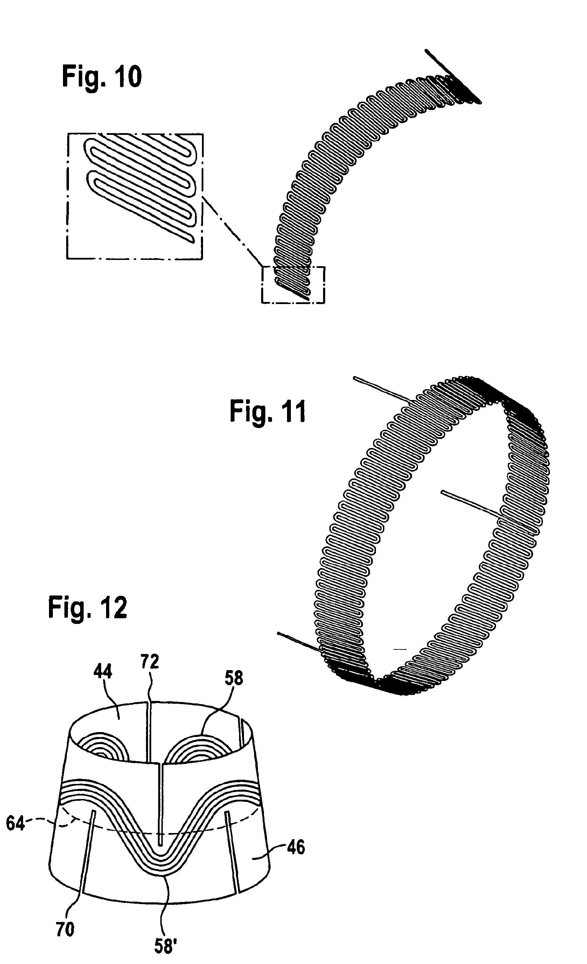

Figur 10 zeigt, wie die Heizwendel als bifilares Element ausgebildet ist, bei dem sich die Kontaktanschlüsse zum Beaufschlagen mit Energie nahe beieinander befinden.

Dies ermöglicht, wie in Figur 11 dargestellt, einen modularen Aufbau der Heizwendel, bei dem mehrere Heizelemente unabhängig voneinander mit Energie beaufschlagt und zur Schweißung verwendet werden können.

Eine weitere Möglichkeit, Heizelemente 58, 58' in Form von Heizdrähten mäanderförmig zwischen den Einschnitten 70, 72 zu führen, ist in Figur 12 veranschaulicht, die eine Ausgleichselement gemäß Figur 4 zeigt. Hier erstreckt sich die Hauptlänge der Drähte im wesentlichen in die Richtung der Äquatorebene 64. Da bis auf eine Wendeschleife keine 180°-Kehren vorgesehen sind, ist diese Art der Anordnung werkzeugtechnisch einfacher zu bewerkstelligen. Das Heizelement auf der Innenfläche 44 des Ausgleichselementes ist dabei kongruent zu dem Heizelement auf der Außenfläche 46 des Ausgleichselementes geführt. Zwar sind in der Zeichnung lediglich fünf untereinander äquidistant verlaufende Heizdrahtführungen gezeigt, es versteht sich aber, daß bei der praktischen Ausgestaltung so viele Drähte nebeneinander angeordnet werden, daß die für das sichere Verschweißen erforderliche Schweißfläche erreicht wird.

## Patentansprüche

1. Ausgleichselement zum Verbinden von Bauteilen aus schmelzbarem Kunststoff, das als zumindest abschnittsweise konisch gestalteter Hohlkörper (40) ausgebildet ist, wobei der Hohlkörper (40) um seine Mittelachse (42) axialsymmetrisch ausgebildet ist und seine Innenfläche (44) parallel zu seiner Mittelachse (42) verläuft, während seine Außenfläche (46) unter einem bestimmten Winkel zu der Mittelachse (42) verläuft, mit wenigstens einem Heizelement (50, 52, 54, 56, 58, 58'), das darauf ausgelegt ist, bei Beaufschlagung mit Energie die Innenfläche (44) oder die Außenfläche (46) des Ausgleichselementes oder beide mindestens bereichsweise zum Herstellen mit einer Schweißverbindung mit den Bauteilen zu heizen, **dadurch gekennzeichnet, dass**,
ausgehend von jeder Randkante (60, 62) des Hohlkörpers (40) Einschnitte (70, 72, 74, 76, 80) eingebracht sind, wobei sich zumindest ein Teil der Einschnitte bis nahe an oder über eine vordefinierte flexibilitätssichernde Ebene (64, 66, 68) des Ausgleichselementes hinaus erstreckt, und erste Einschnitte (70), die von der ersten Randkante (60) im wesentlichen in axialer Richtung ausgehen, und zweite Einschnitte (72), die von der zweiten Randkante (62) im wesentlichen in axialer Richtung ausgehen, vorliegen, die sich jeweils bis nahe an oder über die flexibilitätssichernde Ebene hinaus erstrecken;
wobei die flexibilitätssichernde Ebene (64, 66, 68) als Schnittfläche mit dem Ausgleichselement einen vollständigen Kreis oder eine vollständige Ellipse enthält, deren Flächennormale parallel zur Mittelachse (42) des Hohlkörpers (40) verläuft oder einen bestimmten Winkel mit ihr bildet, derart, dass nirgendwo im Hohlkörper (40) ein geschlossener, umlaufender Ring entsteht.

2. Ausgleichselement nach Anspruch 1, **dadurch gekennzeichnet, dass** die von einer ersten Randkante (60) ausgehenden Einschnitte (70, 74) gegenüber den von der zweiten Randkante (62) ausgehenden Einschnitten (72) in Umfangsrichtung des Ausgleichselementes versetzt angeordnet sind.

3. Ausgleichselement nach Anspruch 1, **dadurch gekennzeichnet, dass** die Einschnitte (70, 72, 75) senkrecht zu den Randkanten (60, 62) sind.

4. Ausgleichselement nach Anspruch 1, **dadurch gekennzeichnet, dass** die Einschnitte (90) zumindest teilweise mit einer schlüssellochartigen Kontur (90, 92) gebildet sind.

5. Ausgleichselement nach Anspruch 1, **dadurch gekennzeichnet, dass** als Heizelement Metallgitter, Metallfäden, Metallpartikel oder Metalldrähte oder eine Schicht oder ein Leiter aus elektrisch leitendem Kunststoff vorgesehen sind oder dass der Hohlkörper (40) aus elektrisch leitendem Kunststoff besteht, wobei das Heizelement auf die Einbringung der Energie mittels Stromfluss oder Induktion oder Mikrowellentechnologie ausgelegt ist.

6. Ausgleichselement nach Anspruch 1, **dadurch gekennzeichnet, dass** das mindestens eine Heizelement (50, 52, 54, 56, 58, 58') eine Heizwendel ist.

7. Ausgleichselement nach Anspruch 6, **dadurch gekennzeichnet, dass** die Heizwendel mäanderförmig zwischen den Einschnitten (70, 72) geführt ist.

8. Ausgleichselement nach Anspruch 1, **dadurch gekennzeichnet, dass** das Heizelement als ein bifilares Element ausgebildet ist.

9. Ausgleichselement nach Anspruch 1, **dadurch gekennzeichnet, dass** es mehrere Heizelemente aufweist, die unabhängig von einander mit Energie zu beaufschlagen sind.

10. Verfahren zum Verbinden von Bauteilen aus schmelzbarem Kunststoff, mit den Schritten:
a) Bereitstellen einer Muffe aus einer Außenhülse und einem darin liegenden Ausgleichselement (4) nach einem der Ansprüche 1 bis 9, wobei das Ausgleichselement sowohl auf seiner Innenfläche (44) als auch auf seiner Außenfläche (46) ein Heizelement (50, 52, 54, 56, 58, 58') aufweist;
b) Aufschieben der Muffe (4) auf ein Bauteil, wobei sich die Außenhülse und das Ausgleichselement axial gegenläufig verschieben und Spalte zwischen Bauteil und Ausgleichselement sowie zwischen Ausgleichselement und Außenhülse minimiert werden;
c) Beaufschlagen des Heizelementes (50, 54, 58) der Innenfläche (44) des Ausgleichselementes mit Energie, um das Bauteil und das Ausgleichselement miteinander zu verschweißen;
d) Beaufschlagen des Heizelementes (52, 56, 58') der Außenfläche (46) des Ausgleichselementes mit Energie, um die Außenhülse und das Ausgleichselement miteinander zu verschweißen.

11. Verfahren nach Anspruch 10, **dadurch gekennzeichnet, dass** der Schritt c) folgende Schritte aufweist:
c1) Beaufschlagen des Heizelementes (50, 54, 58) der Innenfläche (44) des Ausgleichselementes mit einer ersten Energiemenge, um das erste Bauteil vorzuwärmen;
c2) Beaufschlagen des Heizelementes (50, 54, 58) der Innenfläche des Ausgleichselementes mit einer zweiten Energiemenge, um das erste Bauteil und die Ausgleichselement miteinander zu verschweißen.

12. Verfahren nach Anspruch 10, **dadurch gekennzeichnet, dass** der Schritt d) folgende Schritte aufweist:
d1) Beaufschlagen des Heizelementes (52, 56, 58') der Außenfläche (46) des Ausgleichselementes mit einer ersten Energiemenge, um die Außenhülse vorzuwärmen; und
d2) Beaufschlagen des Heizelementes (52, 56, 58') der Außenfläche des Ausgleichselementes mit einer zweiten Energiemenge, um die Außenhülse und das Ausgleichselement miteinander zu verschweißen.

13. Verfahren zum Verbinden von Bauteilen aus schmelzbarem Kunststoff, mit folgenden Schritten:
a) Bereitstellen einer Muffe aus einer Außenhülse und zwei darin liegenden Ausgleichselementen nach einem der Ansprüche 1 bis 9, wobei jedes der Ausgleichselemente sowohl auf seiner Innenfläche (44) als auch auf seiner Außenfläche (46) ein Heizelement (50, 52, 54, 56, 58, 58') aufweist;
b) vollständiges Aufschieben der Muffe auf ein erstes Bauteil;
c) Anlegen eines zweiten Bauteils an das erste Bauteil;
d) Verschieben der Muffe in axialer Richtung über die Anlagestelle zwischen dem ersten Bauteil und dem zweiten Bauteil, so dass eines der Ausgleichselemente über dem ersten Bauteil liegt und das andere Ausgleichselement über dem zweiten Bauteil liegt;
e) gleichzeitiges oder aufeinanderfolgendes Verschieben der Ausgleichselemente in axialer Richtung aufeinander zu; und
f) Beaufschlagen der Heizelemente von Innenfläche und Außenfläche der Ausgleichselemente mit Energie, wodurch das erste Bauteil, die Muffe und das zweite Bauteil miteinander verschweißt werden.

## Claims

1. A compensation element for joining components made of fusible plastics which is at least in sections formed as a conically shaped hollow body (40), said hollow body (40) being configured axisymmetrically in relation to its center axis (42) and an inner surface (44) thereof running parallel to its center axis (42) while an outer surface thereof lying at a specific angle in relation to said center axis (42), comprising at least one heating element (50, 52, 54, 56, 58, 58') which is configured to, when supplied with energy, heat said inner surface (44) or said outer surface (46) of the compensation element or both at least in sections for producing a welded joint with said components, **characterized in that**
starting from each outer edge (60, 62) of said hollow body (40), cuts (70, 72, 74, 76, 80) are formed therein, wherein at least a fraction of said cuts extends close to or beyond a pre-defined, flexibility securing plane (64, 66, 68) of the compensation element, and first cuts (70) starting from the first outer edge (60) substantially in axial direction and second cuts (72) starting from the second outer edge (62) substantially in axial direction are present which respectively extend close to or beyond said flexibility securing plane;
wherein said flexibility securing plane (64, 66, 68) contains as an intersection with the compensation element a complete circle or a complete ellipse, the surface normal thereof lying parallel to said center axis (42) of said hollow body (40) or at an angle thereto such that a closed circumferential ring is produced nowhere in said hollow body (40).

2. The compensation element of claim 1, **characterized in that** said cuts (70, 74) starting from the first outer edge (60) are, in a circumferential direction, offset with respect to the cuts (72) starting from the second outer edge (62).

3. The compensation element of claim 1, **characterized in that** said cuts (70, 72, 74) are perpendicular to said outer edges (60, 62).

4. The compensation element of claim 1, **characterized in that** said cuts (90) are at least partly formed with a keyhole-like contour (90, 92).

5. The compensation element of claim 1, **characterized in that** metal grids, metal strands, metal particles or metal wires or a layer or a conductor made of electrically conductive plastics is provided as said heating element or that said hollow body (40) consists of electrically conductive plastic, wherein the energy supply occurs by means of current flow or induction or microwave technology.

6. Compensation element according to claim 1, **characterized in that** said at least one heating element (50, 52, 54, 56, 58, 58') is a heating spiral.

7. The compensation element of claim 6, **characterized in that** said heating spiral is guided between said cuts (70, 72) in a meander-like manner.

8. The compensation element of claim 1, **characterized in that** said heating element is configured as a bifilar element.

9. The compensation element of claim 1, **characterized in that** it comprises plural heating elements which may be supplied with energy independently from another.

10. A method for joining components made of fusible plastics, comprising the steps of:
a) providing a sleeve comprising an outer sheath and a compensation element (4) of any of claims 1 to 9 lying therein, wherein said compensation element comprises a heating element (50, 52, 54, 56, 58, 58'= both on its inner surface (44) and its outer surface (46);
b) sliding said sleeve (4) an a component, wherein said outer sheath and said compensation element slide oppositely in axial direction and gaps between component and compensation element as well as between compensation element and outer sheath are minimized;
c) supplying energy to the heating element (50, 54, 58) of the inner surface (44) of said compensation element, to weld said component and said compensation element together;
d) supplying energy to the heating element (52, 56, 58') of the outer surface (46) of said compensation element to weld said outer sheath and said compensation element together.

11. The method of claim 10, **characterized in that** step c) comprises the following steps:
c1) supplying a first amount of energy to the heating element (50, 54, 58) of the inner surface (44) of said compensation element to preheat said first component;
c2) supplying a second amount of energy to the heating element (50, 54, 58) of the inner surface of said compensation element to weld said first component and seid compensation element together.

12. The method of claim 10, **characterized in that** said step d) comprises the following steps:
d1) supplying a first amount of energy to the heating element (52, 56, 58') of the outer surface (46) of the compensation element to preheat the outer sheath; and
d2) supplying a second amount of energy to the heating element (52, 56, 58') of the outer surface of said compensation element to weld said outer sheath and said compensation element together.

13. A method for joining components made of fusible plastics, comprising the following steps:
a) providing a sleeve comprising an outer sheath and two compensation elements according to any of claims 1 to 9 lying therein, wherein said compensation element comprises a heating element (50, 52, 54, 56, 58, 58') both on its inner surface (44) and its outer surface (46);
b) completely sliding said sleeve an a first component;
c) abutting a second component to said first component;
e) sliding said sleeve in an axial direction across the abutment site between said first component and said second component, so that one of said compensation elements overlaps said first component and the other of said compensation elements overlaps said second component;
e) sliding said compensation elements in an axial direction towards another simultaneously or consecutively; and
f) supplying energy to the heating elements of inner surface and outer surface of said compensation element simultaneously or consecutively, to weld said first component, said sleeve and the second component together.

## Revendications

1. Elément compensateur pour relier des éléments de construction en plastique fusible, qui est réalisé sous la forme d'un corps creux (40) au moins partiellement conique, sachant que le corps creux (40) est réalisé de manière axisymétrique autour de son axe médian (42) et que sa surface interne (44) s'étend parallèlement à son axe médian (42) tandis que sa surface externe (46) s'étend suivant un angle précis par rapport à l'axe médian (42), équipé d'au moins un élément de chauffe (50, 52, 54, 56, 58, 58') qui est conçu pour chauffer, lorsqu'il est alimenté en énergie, la surface interne (44) ou la surface externe (46) de l'élément compensateur ou les deux, au moins de manière partielle, pour l'établissement d'une liaison soudée avec les éléments de construction, **caractérisé en ce qu'**à partir de chaque arête de bordure (60, 62) du corps creux (40), on a réalisé des entailles (70, 72, 74, 76, 80), sachant qu'au moins une partie des entailles s'étend jusqu'à une zone située très près ou au-dessus d'un plan prédéfini assurant la flexibilité (64, 66, 68) de l'élément compensateur et qu'on a réalisé des premières entailles (70), dépassant de la première arête de bordure (60) sensiblement dans le sens axial, et des secondes entailles (72), dépassant de la seconde arête de bordure (62) sensiblement dans le sens axial, qui s'étendent jusqu'à une zone située très près ou au-dessus d'un plan assurant la flexibilité, sachant que le plan assurant la flexibilité (64, 66, 68) comprend, en tant que surface d'intersection avec l'élément compensateur, un cercle complet ou une ellipse complète dont la normale à une surface s'étend de manière parallèle à l'axe médian (42) du corps creux (40) ou forme avec lui un angle précis de telle sorte qu'il n'apparaisse nulle part dans le corps creux (40) un anneau circonférentiel fermé.

2. Elément compensateur selon la revendication 1, **caractérisé en ce que** les entailles (70, 74) partant d'une première arête de bordure (60) sont disposées en décalage par rapport aux entailles (72) partant de la seconde arête de bordure (62), dans le sens circonférentiel de l'élément compensateur.

3. Elément compensateur selon la revendication 1, **caractérisé en ce que** les entailles (70, 72, 75) sont perpendiculaires aux arêtes de bordure (60, 62).

4. Elément compensateur selon la revendication 1, **caractérisé en ce que** les entailles (90) sont réalisées au moins en partie avec un contour à mode de trou de serrure (90, 92).

5. Elément compensateur selon la revendication 1, **caractérisé en ce que**, en tant qu'élément de chauffe, on a prévu des grilles métalliques, des filaments métalliques, des particules métalliques ou des fils métalliques ou une couche ou un conducteur en matière plastique conductrice d'électricité ou **en ce que** le corps creux (40) est composé d'une matière plastique conductrice d'électricité, l'élément de chauffe étant conçu pour l'amenée de l'énergie au moyen d'un flux de courant ou de l'induction ou de la technologie à micro-ondes.

6. Elément compensateur selon la revendication 1, **caractérisé en ce que** le ou les éléments de chauffe (50, 52, 54, 56, 58, 58') sont une spirale chauffante.

7. Elément compensateur selon la revendication 6, **caractérisé en ce que** la spirale chauffante est installée à mode de méandre entre les entailles (70, 72).

8. Elément compensateur selon la revendication 1, **caractérisé en ce que** l'élément de chauffe est réalisé sous la forme d'un élément bifilaire.

9. Elément compensateur selon la revendication 1, **caractérisé en ce qu'**il comprend plusieurs éléments de chauffe qui doivent être alimentés en énergie de manière indépendante les uns des autres.

10. Procédé pour relier des éléments de construction en matière plastique fusible, présentant les étapes suivantes :
a) la fourniture d'un manchon composé d'une douille externe et d'un élément compensateur (4) se trouvant à l'intérieur selon l'une quelconque des revendications 1 à 9, sachant que l'élément compensateur comporte un élément de chauffe (50, 52, 54, 56, 58, 58') à la fois sur sa surface interne (44) et sur sa surface externe (46),
b) l'enfilage du manchon (4) sur un élément de construction, sachant que la douille externe et l'élément compensateur se déplacent à contresens dans le sens axial et que les fentes entre l'élément de construction et l'élément compensateur ainsi qu'entre l'élément compensateur et la douille externe sont minimisées,
c) l'alimentation en énergie de l'élément de chauffe (50, 54, 58) de la surface interne (44) de l'élément compensateur afin de souder ensemble l'élément de construction et l'élément compensateur.
d) l'alimentation en énergie de l'élément de chauffe (52, 56, 58') de la surface externe (46) de l'élément compensateur afin de souder ensemble la douille externe et l'élément compensateur.

11. Procédé selon la revendication 10, **caractérisé en ce que** l'étape c) comporte les étapes suivantes :
c1) l'alimentation de l'élément de chauffe (50, 54, 58) de la surface interne (44) de l'élément compensateur avec une première quantité d'énergie afin de préchauffer le premier élément de construction,
c2) l'alimentation de l'élément de chauffe (50, 54, 58) de la surface interne de l'élément compensateur avec une seconde quantité d'énergie afin de souder ensemble le premier élément de construction et l'élément compensateur.

12. Procédé selon la revendication 10, **caractérisé en ce que** l'étape d) comporte les étapes suivantes :
d1) l'alimentation de l'élément de chauffe (52, 56, 58') de la surface externe (46) de l'élément compensateur avec une première quantité d'énergie afin de préchauffer la douille externe et
d2) l'alimentation de l'élément de chauffe (52, 54, 58') de la surface externe de l'élément compensateur avec une seconde quantité d'énergie afin de souder ensemble la première douille externe et l'élément compensateur.

13. Procédé pour relier des éléments de construction en matière plastique fusible, présentant les étapes suivantes :
a) la fourniture d'un manchon composé d'une douille externe et de deux éléments compensateurs se trouvant à l'intérieur selon l'une quelconque des revendications 1 à 9, sachant que chacun des éléments compensateurs comporte un élément de chauffe (50, 52, 54, 56, 58, 58') à la fois sur sa surface interne (44) et sur sa surface externe (46),
b) l'enfilage complet du manchon sur un premier élément de construction,
c) l'application d'un second élément de construction sur le premier élément de construction,
d) le déplacement du manchon dans le sens axial pardessus le point d'appui, entre le premier élément de construction et le second élément de construction de telle sorte que l'un des éléments compensateurs repose au-dessus du premier élément de construction et que l'autre élément compensateur repose au-dessus du second élément de construction,
e) le déplacement simultané ou consécutif des éléments compensateurs, dans un sens axial, l'un vers l'autre et
f) l'alimentation en énergie des éléments de chauffe de la surface interne et la surface externe des éléments compensateurs, moyen par lequel le premier élément de construction, le manchon et le second élément de construction sont soudés ensemble.
